# EUROPEAN PATENT SPECIFICATION

(11) **EP 4 475 508 B1**
(45) Date of publication and mention of the grant of the patent: **04.11.2026**
(21) Application number: 23305899.9
(22) Date of filing: 06.06.2023
(51) Int. Cl.: H04L 41/5009, H04L 41/142, H04L 41/40, H04L 41/5022, H04L 41/5025, H04L 41/5067, H04L 41/0894, H04W 28/24

(54) **METHOD AND SYSTEM FOR ORCHESTRATING RESOURCES OF A WIRELESS NETWORK**
VERFAHREN UND SYSTEM ZUR ORCHESTRIERUNG VON RESSOURCEN EINES DRAHTLOSEN NETZWERKS
PROCÉDÉ ET SYSTÈME D'ORCHESTRATION DE RESSOURCES D'UN RÉSEAU SANS FIL

(43) Date of publication of application: 11.12.2024
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: KHANFOUCI, Mourad, 35708 RENNES CEDEX 7 (FR)
(74) Representative: Plasseraud IP

(56) References cited:
- EP-A1- 3 327 990
- WO-A1-2020/049181
- ALQERM ISMAIL ET AL: "DeepEdge: A New QoE-Based Resource Allocation Framework Using Deep Reinforcement Learning for Future Heterogeneous Edge-IoT Applications", IEEE TRANSACTIONS ON NETWORK AND SERVICE MANAGEMENT, IEEE, USA, vol. 18, no. 4, 29 October 2021 (2021-10-29), pages 3942 - 3954, XP011892503, [retrieved on 20211208], DOI: 10.1109/TNSM.2021.3123959

## Description

### Technical Field

This disclosure pertains to the field of telecommunications.

The disclosure more particularly relates to a method and a system for orchestrating resources of a wireless network. The disclosure further relates to a corresponding non-transitory storage medium.

### Background Art

The successful integration of applications into private 5G network deployments in industrial settings presents a significant challenge. A critical problem encountered during this process is optimizing application deployment to ensure seamless integration with existing applications. One of the key challenges is maintaining high quality-of-service (QoS) for newly deployed applications without sacrificing the quality-of-experience (QoE) of already deployed applications. Current solutions are inadequate as they fail to address this problem effectively. Therefore, there is a pressing need for the development of robust and efficient systems and methods to enhance QoE while deploying multiple applications in a communication network, particularly in industrial contexts.

Document ALQERM ISMAIL ET AL: "DeepEdge: A New QoE-Based Resource Allocation Framework Using Deep Reinforcement Learning for Future Heterogeneous Edge-IoT Applications", IEEE TRANSACTIONS ON NETWORK AND SERVICE MANAGEMENT, IEEE, USA, vol. 18, no. 4, 29 October 2021 (2021-10-29), pages 3942-3954, XP011892503,DOI: 10.1109/TNSM.2021.3123959, discloses a method of allocating resources to IoT applications with the goal of maximizing user's QoE. For this purpose, a QoE model is developed that aligns the requirements of IoT applications to the available resources. This is done by performing a selection of QoS metrics range which can be satisfied with the available resources. A two stage deep-reinforcement learning scheme is proposed to allocate the network resources and maximize user's QoE.

### Summary

This disclosure improves the situation.

It is proposed a method for orchestrating resources of a wireless network, the method being implemented by at least one processing unit and comprising:
a) collecting values of a plurality of quality of service (QoS) parameters and of quality of experience (QoE) feedback, each collected value being identified as relating to an application,
b) observing variations of the collected values identified as relating to a same given application,
c) selecting a QoS degradation parameter which is the QoS parameter which values have observed variations for the given application that are most correlated with the observed variations of the QoE feedback for the given application,
d) adjusting an exponential parametric model to approximate a relationship between the observed variations of the QoE feedback for the given application and the observed variations of the selected QoS parameter for the given application, and
e) orchestrating resources of the wireless network based on the adjusted exponential parametric model.

The processing unit is indifferently understood as a software entity, a hardware entity, or a combination of one or more hardware and software entities, offering versatility in deployment options. The processing unit may for instance correspond to a virtual network function such as the network data analytics function (NWDAF) or to a proprietary function which collects the feedback from the application and the values of the QoS parameters or to a virtual function implemented in an edge cloud server.

"Selecting' the QoS degradation parameter may refer for instance to identifying or determining the appropriate parameter among the available QoS parameters. The available parameters may include for instance latency, packet loss rate, bandwidth or jitter, and/or other parameters that can be derived or calculated from the mentioned ones such as round-trip time, network utilization, or error rate.

"Adjusting" the exponential parametric model can be understood as determining, fitting, or learning the values of the parameters within the mathematical form of the exponential parametric model, without modifying the mathematical form itself.

The method enables efficient management of resources in a wireless network by considering both QoS parameters and QoE feedback from applications. Further, by identifying the QoS parameter that is most correlated with observed variations in QoE feedback, the method focuses on the factors most likely to impact user experience.

The selection of the exponential parametric model is not arbitrary but has demonstrated a strong tendency to converge towards an optimized value of QoE sensitivity. By accurately capturing the relationship between observed variations in QoE feedback and the selected QoS parameter, the model enables effective resource allocation and optimization.

In embodiments of the method,
- b), c) and d) are repeated for a plurality of applications deployed over the wireless network to obtain a plurality of adjusted exponential parametric models having a one-to-one relationship with the plurality of applications, and
- e) comprises orchestrating resources of the wireless network based on each of the adjusted exponential parametric models.

This ensures that resources are allocated and managed in a manner that directly aligns with the requirements and behavior of each application.

In embodiments of the method, the wireless network is a non-public network.

This allows enhanced control and security over a public network.

In embodiments of the method, the values of QoE feedback relating to an application originate from a plurality of client applications of said application.

This offers a more complete view of the user experience for a given application and further contributes to improving resource allocation decisions.

In embodiments of the method, the values of QoE feedback comprise a mean opinion score and/or a peak signal to interference and noise ratio.

MoS is a subjective assessment of QoE while PSNR is an objective assessment of QoE. Combining both is a dual approach which further contributes to improving resource allocation decisions.

In embodiments of the method, e) comprises orchestrating virtual resources comprising network resources, storage resources and/or processing resources.

This is particularly advantageous in wireless network environments where efficient utilization of available virtual resources is crucial for maintaining reliable and high-quality connections.

In embodiments of the method, e) comprises orchestrating radio resources.

This is particularly advantageous in wireless network environments where efficient utilization of available radio resources is crucial for maintaining reliable and high-quality connections.

In embodiments of the method, c) comprises:
- determining, for each QoS parameter which values have been collected, a gradient of the collected values of QoE feedback with respect to the collected values of said QoS parameter, and
- selecting, as the QoS degradation parameter, the QoS parameter for which the highest gradient has been thusly determined.

This ensures that resources are orchestrated based on the QoS parameter that has the most substantial influence, for a given application, on QoE.

In embodiments of the method, c) comprises:
- running a principal component analysis mechanism to determine a principal component showing a maximum variance with respect to the collected quality of experience feedback; and
- selecting, as the QoS degradation parameter, the QoS parameter which collected values are closest to said principal component.

The dimensionality reduction which is inherent to PCA reduces the complexity of the QoS parameter selection.

In embodiments of the method, c) comprises:
- classifying the QoS parameters into classes with respect to the observed variations of QoE, and
- selecting, as the QoS degradation parameter, the class for which the greatest variation of the QoE feedback is observed.

The classification of the QoS parameters into classes further reduces the complexity of the QoS parameter selection.

It is further proposed a system for orchestrating resources of a wireless network, the system comprising at least one processing unit configured to:
a) collect values of a plurality of quality of service (QoS) parameters and of quality of experience (QoE) feedback, each collected value being identified as relating to an application,
b) observe variations of the collected values identified as relating to a same given application,
c) select a QoS degradation parameter which is the QoS parameter which values have observed variations for the given application that are most correlated with the observed variations of the QoE feedback for the given application,
d) adjust an exponential parametric model to approximate a relationship between the observed variations of the QoE feedback for the given application and the observed variations of the selected QoS parameter for the given application, and
e) orchestrate resources of the wireless network based on the adjusted exponential parametric model.

It is further proposed a computer program comprising instructions which, when the program is executed by a processing unit, cause the processing unit to carry out the above method.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

### Brief Description of Drawings

Other features, details and advantages will be shown in the following detailed description and on the figures, on which:
**Fig. 1**

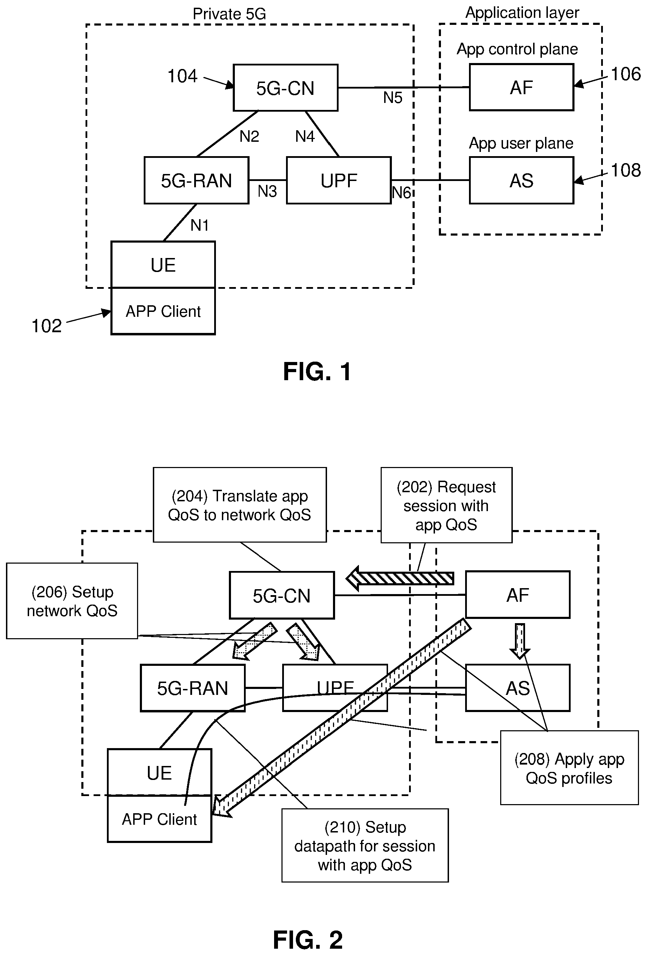

   [Fig. 1] illustrates an exemplary private 5G deployment.
**Fig. 2**
   [Fig. 2] illustrates an exemplary integration of an application with the private 5G deployment of Fig. 1.
**Fig. 3**

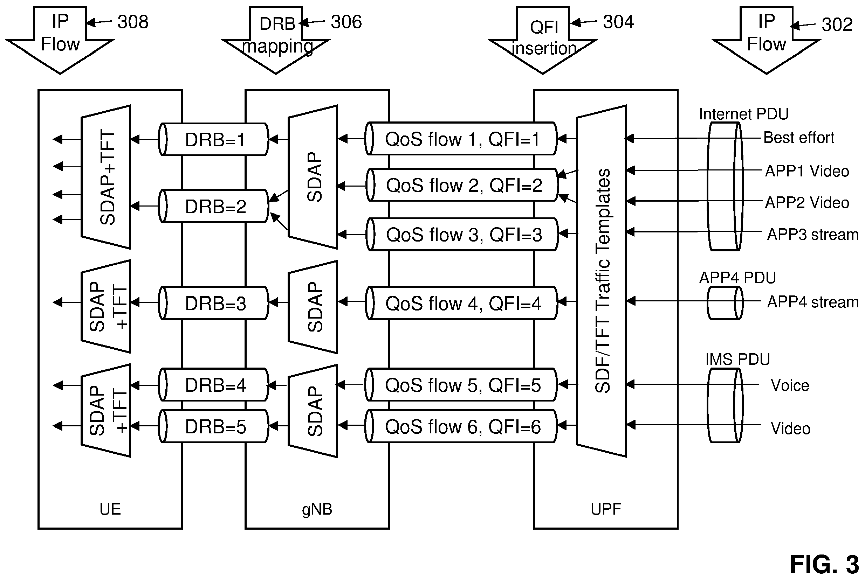

   [Fig. 3] illustrates an exemplary quality-of-service mapping at a core network.
**Fig. 4**

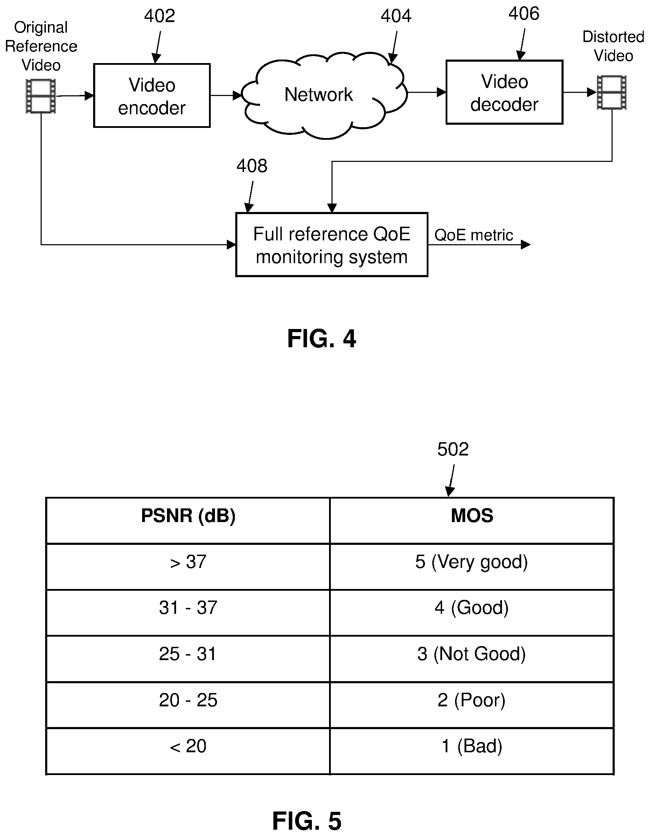

   [Fig. 4] illustratesn exemplary quality-of-experience determination for a video streaming application.
**Fig. 5**
   [Fig. 5] illustrates an exemplary peak signal-to-noise ratio to mean opinion score mapping.
**Fig. 6**

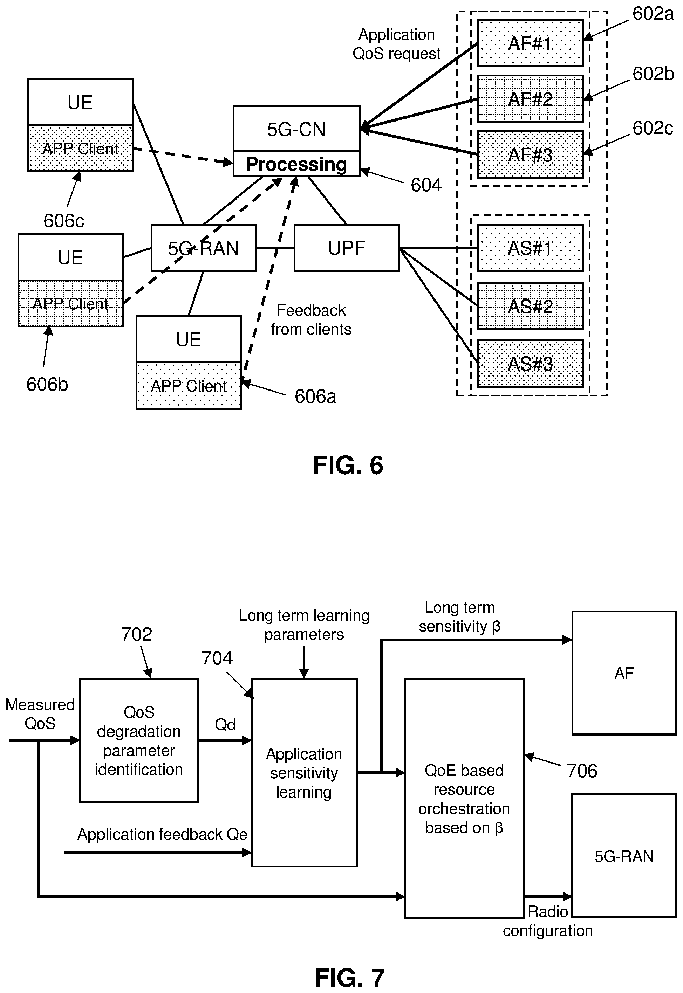

   [Fig. 6] illustrates an exemplary private 5G network deployment.
**Fig. 7**
   [Fig. 7] illustrates an exemplary workflow of a quality-of-experience sensitivity learning and network resource orchestration process.

### Description of Embodiments

Fig. 1 illustrates a typical deployment of an application over a private 5G network in a smart factory, where the considered application is a video streaming application from clients located in the factory floor towards a server (108) located in the edge cloud. The edge server collects data from the clients (102) and provides additional functionalities such as image recognition or artificial intelligence (AI).

A 5G mobile communication network, or 5G system, comprises a 5G core network (5GCN) and a 5G New Radio Access Network (5G-RAN). The user equipments (UE) may connect over the 5G New Radio Access Network to the 5GCN and further to Data Networks (DN) like the Internet.

The key components of the 5GCN are network functions split up by service to govern the network behavior. These network functions include:
- the Access and Mobility Management Function (AMF) which acts as a single-entry point for the UE connection,
- respective Session Management Functions (SMF) selected by the AMF for managing a user session for a service requested by the UE,
- the User Plane Function (UPF) which transports the IP data traffic (user plane) between the User Equipment (UE) and the external networks, and
- the Policy Control Function (PCF) which provides the policy control framework,
- the Unified Data Management (UDM) function which manages network user data,
- the Network Data Analytics Function (NWDAF) which collects data from the other 5G network functions, processes these data and outputs analytics, for instance statistical analytics or machine learning predictions, to support the other 5G network functions,
- the Network Exposure Function (NEF) which exposes 3GPP core network capabilities to third parties,
- etc.

The 5G network stack comprises an open wireless architecture layer, a network layer, an open transport layer and an application layer (APP). The latter can be mapped to the presentation layer and to the application layer of the OSI stack.

The application function (AF) (106) is the control plane of the application layer and provides application services.

The steps of the integration of an application to the deployment is illustrated in Fig. 2 and Fig. 3 and involves the following steps:

The AF, which serves as the control plane of the application, requests (202) a session with a specific application quality of service from the private 5G network. The request contains various parameters such as UE address, AF Identifier, Flow description(s) or External Application Identifier, QoS reference, QoS parameters, Alternative Service Requirements, DNN, S-NSSAI, among others. Additional details about the parameters that may be contained in the request are provided in TS 23.502, section 4.15.6.6. The request is transmitted directly to the policy control function node (PCF) of the network if the AF is a trusted network function, or to the network exposure function (NEF) if the AF is not a trusted AF.

The PCF/NEF authorizes the request and maps (204) it into internal 5G network QoS parameters such as the 5G QoS Identifier (5QI), Allocation and Retention Priority (ARP), Guaranteed Flow Bit Rate (GFBR), Maximum Flow Bit Rate (MFBR), Maximum Packet Loss Rate, Delay Critical Resource Type, Notification Control, Reflective QoS Attribute (RQA), Session-AMBR, and UE-AMBR parameters. The QoS parameters depend on whether the QoS flow is guaranteed bit rate (GBR) or non-GBR.

The session management function (SMF) sets up (206) the QoS flow between the user equipment (UE) and the network. The UPF inserts a QoS flow indicator (QFI) that corresponds to the network QoS, and mapping is performed between QFIs and the data radio bearers setup between the UE and the gNB.

The QoS app profiles are applied (208) to the application server and the application clients to shape the traffic to the requested app QoS by the AF. This step may also be applied after the authorization of the request by the PCF/NEF.

The data path for the application session is set up (210) between the application server and the application client, based on the requested app QoS.

By following these steps, a seamless integration of an application to the deployment in a private 5G network can be achieved, while ensuring the QoS of the application is maintained throughout the session.

Fig. 3 illustrates, with a particular example, the process of establishing and managing a QoS flow between an application and a private 5G network, through the use of QFI insertion and DRB mapping, in order to ensure that the different types of traffic receive the appropriate QoS treatment.

Three different types of Protocol Data Units (PDU) are represented: Internet PDU, App4 PDU, and IMS PDU. Seven IP flows (302) are shown to represent different types of input data traffic, including for the Internet PDU, Best Effort, App1 Video, App2 Video and App3 Stream, for the App4 PDU, App4 Stream and for the IMS PDU, Voice and Video. Each IP flow has its own QoS requirements, such as bandwidth, delay, and packet loss rate.

A set of Service Data Flow/Traffic flow templates (SDF/TFT) at the User Plane Function (UPF) allows performing QoS Flow Identification insertion (304). Each flow is thusly assigned a QoS Flow Identifier (QFI) from 1 to 7.

For each PDU, a corresponding Service Data Application Protocol module (SDAP) is provided at a gNB. The SDAP allow performing Data Radio Bearer (DRB) mapping (306). SDAP can merge multiple QoS flows into a single DRB for efficient network utilization. Five data radio bearers are here represented.

Finally, for each PDU, a corresponding Service Data Adaptation Protocol and Traffic Flow Template module (SDAP+TFT) is provided at a UE to further optimize the QoS flow between the application and the network. The UE ultimately receives the traffic as seven IP flows (308).

The quality of experience (QoE) of an application is a critical factor in ensuring user satisfaction. The QoE is defined as the average opinion score that describes the quality of the received application flow, and the main terminology for this QoE metric is the mean opinion score (MoS). The MoS values may range for instance from 1 (bad) to 5 (very good). To maximize the QoE of the application client, the reference and alternative QoS profiles are selected by the AF. In the case of video streaming, the video client transmits feedback of the MoS ranking to the server, based on the quality of the received video stream described in terms of peak signal-to-noise ratio (PSNR), which is calculated as the difference between the received video and the original video.

Fig. 4 depicts an example of how QoE may be calculated for a video streaming application. An original video is encoded by a video encoder (402) and transmitted across the network (404) to a video decoder (406). The decoded video is compared with the original video, serving as a reference, by a full reference QoE monitoring system (408). A QoE metric, such as the MoS described above, may then be determined as a function of the result of the comparison.

Fig. 5 depicts a table (502) that may be used to map the MoS with the PSNR. The QoE-QoS relationship is an important tool for optimizing the QoE at the application layer. The AF can calculate statistics of the MoS received from the application client and build a QoE-QoS function to select requested QoS profiles from the network that maximize the QoE of the application. However, this learning is only dependent on the MoS and QoS of the application and may cause issues when multiple applications are sharing the resources of the private 5G system.

In the context of the deployment of multiple applications in a factory, the selection of reference and alternative QoS parameters may impact the QoE of other applications deployed in the network. For example, if the requested QoS is too high, the 5G core network may reject the demand of the AF since this request may impact the QoS that could be offered to other AFs deployed in the network. On the other hand, if the requested QoS is too low, there is no guarantee that the requested app QoS is sufficient to optimize the QoE, i.e., the PSNR may be low so the MoS is "not good" (rate 3) to "bad" (rate 1). If the requested QoS is too high, the 5G core network may reject the demand of the AF since this request may impact the QoE that could be offered to other AFs deployed in the network.

According to the present disclosure, it is proposed a technique for enhancing the QoE in networks, specifically addressing the reduction of QoE caused by high QoS demands from applications in highly loaded networks. By learning the sensitivity of QoE to specific QoS degradation parameters for each deployed application, the network can effectively orchestrate network resources to optimize the QoE. The proposed technique utilizes a simple and low complexity learning model based on an exponential degradation model to approximate the QoE-QoS relationship.

Learning the sensitivity of QoE with respect to QoS degradation may be performed for instance by:
- collecting QoE feedback from deployed application clients, such as mean opinion scores (MoS), to evaluate application satisfaction,
- observing variations in QoS parameters and identifying the dominant QoS degradation parameter that significantly affects QoE, and
   learning the sensitivity of application satisfaction with respect to QoS degradation by approximating the QoE-QoS relationship using an exponential parametric model.

Orchestrating network resources based on the learned QoE sensitivity may involve:
- orchestrating specific virtual resources, including network, storage, and processing resources, to optimize the QoE of deployed applications, and/or
- orchestrating radio resources and deriving system parameters to optimize the QoE of applications.

Advantages of the proposed technique lie in its ability to enhance user satisfaction, improve resource allocation, employ a low complexity learning model, adapt to changing network conditions, improve efficiency, and offer broad applicability in the context of 5G deployment. These benefits collectively contribute to an improved QoE and network performance in various network environments and application scenarios.

The proposed technique fills a gap in current 5G technologies and contributes to the advancement of network optimization strategies.

Fig. 6 illustrates an exemplary private 5G network deployment.

Fig. 6 shares a similar structure and elements as Fig. 1. However, while Fig. 1 is focused on illustrating a single application with a single UE, AF, and AS, Fig. 6 showcases the deployment of multiple applications over the private 5G network, leading to the inclusion of multiple application clients (606a, 606b, 606c), AF (602a, 602b, 602c), and AS.

The following description outlines an exemplary implementation of the proposed technique by the network, more specifically by a functional entity of the 5G-CN which comprises, at least, an interface and a processing unit (604). Fig. 7 represents an exemplary workflow for the operations performed by the processing unit (604).

The following description highlights two key aspects that are executed based on specific triggers and do not necessarily occur simultaneously or strictly periodically: (1) the network's learning of the sensitivity of the quality of experience (QoE) with respect to QoS degradation, and (2) the network's performance of network resources orchestration based on the learned QoE sensitivity.

To initiate the learning process and orchestration, the network leverages various triggers such as application QoS requests received from the Application Functions (AF) to the 5G Core Network (5G-CN).The learning process is now described in further detail.

The learning process entails collecting QoE feedback, in particular from the application clients that are deployed over the network. There are several possible implementations for collecting the QoE feedback, as outlined below.

The QoE feedback from an application client may comprise for example a mean opinion score (MoS). For a video transmission, this may be the average evaluation of the quality of the video transmission that is performed by the application client for a specific video transmission. The average evaluation may be calculated over a specific number of frames that is setup by the application layer and/or by the network.

The QoE feedback from an application client may also comprise a peak signal to interference and noise ratio (PSNR). For a video transmission, this PSNR may be measured at the client and correspond to a measure of the maximum distortion of a sequence of images received during a video streaming.

The QoE feedback may comprise a worst case MoS and/or a lowest PSNR, for instance between a downlink video streaming calculated at one or more application clients and an uplink video streaming calculated at one or more application servers.

The learning process further entails monitoring and observing the variations in QoS parameters.

By analyzing the QoE feedback and the observed variations in QoS parameters, which are provided as inputs, the network can identify (702) the QoS parameter that has the most significant influence on QoE variation, hereafter referred to as the "QoS degradation parameter". There are several possible implementations for calculating this parameter, as outlined below.

One approach involves measuring the QoS variables and calculating the gradient of QoE with respect to the QoS variables. The QoS degradation parameter is determined by selecting the QoS variable that maximizes the QoE gradient.

Another approach utilizes principal component analysis (PCA) to determine the QoS degradation parameter. By applying PCA to the data, the network can identify the QoS variable that is closest to the principal component exhibiting the maximum variance in QoE.

A classification-based approach is also viable for obtaining the QoS degradation parameter. In this method, the network classifies the QoS variables based on their impact on QoE variations. By analyzing the QoS classes, the network identifies the class that results in the highest variation in QoE. This approach is particularly efficient when large amounts of application client feedback are available.

Regardless of the specific implementation, the calculation of the QoS degradation parameter is performed individually for each deployed application. This enables the network to tailor its optimization efforts to the unique characteristics and requirements of each application, ultimately enhancing the overall QoE.

An application sensitivity learning module learns (704) the relationship between the QoE variation for a particular application and the corresponding QoS degradation parameter. This relationship, also called "application sensitivity relationship" is specifically approximated using an exponential parametric model. Different possible approaches are suitable to perform this approximation.

An exemplary iterative approach where the QoS-QoE relationship for a given application is learnt over a learning period T is described herein for illustration purposes.

The time period T may be time-split into K elementary time periods. For each elementary period k, and for each application, it is possible to learn an instantaneous sensitivity parameter which represents the sensitivity of QoE for the given application with respect to QoS degradation within that specific elementary time period.

The calculation of the instantaneous sensitivity parameter may be performed for instance by using the following relation where the QoS degradation is denoted as *Qd* and the QoE variable as *Qe.*
${β}_{0} \left(k\right) = - \frac{Qe \left(k+1\right) - Qe \left(k\right)}{Qe \left(k\right) \left(Qd\left(k+1\right)-Qd\left(k\right)\right)}$

Once the instantaneous sensitivity parameter is determined, a long-term estimation of the sensitivity parameter over the learning period may be calculated. This calculation may for instance involve a smoothing parameter *α* which can either be transmitted by the application or selected by the network, based on the deployment conditions. The calculation of the long-term estimation of the sensitivity parameter may be performed for instance by using the following relation.
$β \left(k\right) = \left(1-α\right) β \left(k-1\right) + {αβ}_{0} \left(k\right)$

The sensitivity parameter *β* may be stored for each of the different applications deployed in the network. A mapping between the application class indicator that is transmitted by the application during the application request may also be stored along with the sensitivity parameter *β*.

The network performs network resources orchestration based on the learnt QoE sensitivity with respect to the QoS degradation.

Subsequently, the network performs network resources orchestration (706) based on the learned QoE sensitivity.

The network resources orchestration by the network may include the orchestration of specific virtual resources (such as network, storage, and processing resources) to optimize the QoE of the deployed applications. The network's hypervisor may for instance create virtual machines dedicated to the operation of the applications and map the virtual resources to the QoS degradation parameters (Qd) determined for each application as described above. By dynamically re-orchestrating resources based on the learned sensitivity parameter β of a given application showing a particularly high sensitivity, the network aims to specifically enhance the QoE for this application and to more generally enhance the overall QoE for all deployed applications.

The network resources orchestration by the network may also include the orchestration of radio resources and the derivation of system parameters to optimize the QoE of the applications. The Access and Mobility Management Function (AMF) and Session Management Function (SMF) nodes manage radio and session parameters, respectively. The Network Data Analytics Function (NWDAF) may learn the sensitivity parameters and establish a mapping between the radio/session QoS parameters and the QoS degradation parameter (Qd). This mapping enables the AMF-SMF to identify the PDU sessions of the applications and to apply PDU session/radio parameter reconfiguration to maximize QoE based on the sensitivity parameter β learned for each application.

## Claims

1. Method for orchestrating resources of a wireless network, the method being implemented by at least one processing unit (604) and comprising:
a) collecting values of a plurality of quality of service, QoS, parameters and of quality of experience, QoE feedback, each collected value being identified as relating to an application,
b) observing variations of the collected values identified as relating to a same given application,
c) selecting (702) a QoS degradation parameter which is the QoS parameter which values have observed variations for the given application that are most correlated with the observed variations of the QoE feedback for the given application,
d) adjusting (704) an exponential parametric model to approximate a relationship between the observed variations of the QoE feedback for the given application and the observed variations of the selected QoS parameter for the given application, and
e) orchestrating (706) resources of the wireless network based on the adjusted exponential parametric model.

2. Method according to claim 1, wherein:
- b), c) and d) are repeated for a plurality of applications deployed over the wireless network to obtain a plurality of adjusted exponential parametric models having a one-to-one relationship with the plurality of applications, and
- e) comprises orchestrating resources of the wireless network based on each of the adjusted exponential parametric models.

3. Method according to claim 1, wherein the wireless network is a non-public network.

4. Method according to claim 1, wherein the values of QoE feedback relating to an application originate from a plurality of client applications of said application.

5. Method according to claim 1, wherein the values of QoE feedback comprise a mean opinion score and/or a peak signal to interference and noise ratio.

6. Method according to claim 1, wherein e) comprises orchestrating virtual resources comprising network resources, storage resources and/or processing resources.

7. Method according to claim 1, wherein e) comprises orchestrating radio resources.

8. Method according to claim 1, wherein c) comprises:
- determining, for each QoS parameter which values have been collected, a gradient of the collected values of QoE feedback with respect to the collected values of said QoS parameter, and
- selecting, as the QoS degradation parameter, the QoS parameter for which the highest gradient has been thusly determined.

9. Method according to claim 1, wherein c) comprises:
- running a principal component analysis mechanism to determine a principal component showing a maximum variance with respect to the collected quality of experience feedback; and
- selecting, as the QoS degradation parameter, the QoS parameter which collected values are closest to said principal component.

10. Method according to claim 1, wherein c) comprises:
- classifying the QoS parameters into classes with respect to the observed variations of QoE, and
- selecting, as the QoS degradation parameter, the class for which the greatest variation of the QoE feedback is observed.

11. System for orchestrating resources in a wireless network, the system comprising at least one processing unit (604) configured to:
a) collect values of a plurality of quality of service, QoS, parameters and of quality of experience, QoE, feedback, each collected value being identified as relating to an application,
b) observe variations of the collected values identified as relating to a same given application,
c) select (702) a QoS degradation parameter which is the QoS parameter which values have observed variations for the given application that are most correlated with the observed variations of the QoE feedback for the given application,
d) adjust (704) an exponential parametric model to approximate a relationship between the observed variations of the QoE feedback for the given application and the observed variations of the selected QoS parameter for the given application, and
e) orchestrate (706) resources of the wireless network based on the adjusted exponential parametric model.

12. Non-transitory storage medium storing instructions of a computer program which, when executed by a processing unit, cause the processing unit to carry out the method of any one of claims 1 to 10.

## Patentansprüche

1. Verfahren zum Orchestrieren von Ressourcen eines drahtlosen Netzwerks, wobei das Verfahren durch wenigstens eine Verarbeitungseinheit (604) implementiert wird und umfasst:
a) Erfassen von Werten einer Mehrzahl von Servicequalitäts-, QoS - quality of service, Parametern und von Erlebnisqualitäts-, QoE - quality of experience, Rückmeldungen, wobei jeder erfasste Wert als zu einer Anwendung gehörend identifiziert wird,
b) Beobachten von Variationen der erfassten Werte, welche als zu einer gleichen gegebenen Anwendung gehörend identifiziert werden,
c) Auswählen (702) eines QoS-Degradationsparameters, welcher der QoS-Parameter ist, dessen Werte für die gegebene Anwendung beobachtete Variationen aufweisen, welche am stärksten mit den beobachteten Variationen der QoE-Rückmeldung für die gegebene Anwendung korreliert sind,
d) Anpassen (704) eines exponentiellen parametrischen Modells zum Annähern einer Beziehung zwischen den beobachteten Variationen der QoE-Rückmeldung für die gegebene Anwendung und den beobachteten Variationen des ausgewählten QoS-Parameters für die gegebene Anwendung und
e) Orchestrieren (706) von Ressourcen des drahtlosen Netzwerks auf Grundlage des angepassten exponentiellen parametrischen Modells.

2. Verfahren nach Anspruch 1, wobei:
- b), c) und d) für eine Mehrzahl von Anwendungen wiederholt werden, welche über das drahtlose Netzwerk bereitgestellt werden, um eine Mehrzahl von angepassten exponentiellen parametrischen Modellen zu erhalten, welche eine Eins-zu-eins-Beziehung mit der Mehrzahl von Anwendungen aufweisen, und
- e) ein Orchestrieren von Ressourcen des drahtlosen Netzwerks auf Grundlage jedes der angepassten exponentiellen parametrischen Modelle umfasst.

3. Verfahren nach Anspruch 1, wobei das drahtlose Netzwerk ein nicht-öffentliches Netzwerk ist.

4. Verfahren nach Anspruch 1, wobei die Werte der QoE-Rückmeldung, welche zu einer Anwendung gehören, von einer Mehrzahl von Client-Anwendungen der Anwendung stammen.

5. Verfahren nach Anspruch 1, wobei die Werte der QoE-Rückmeldung einen durchschnittlichen Meinungswert und/oder ein Spitzensignal-zu-Interferenz-und-Rausch-Verhältnis umfassen.

6. Verfahren nach Anspruch 1, wobei e) ein Orchestrieren virtueller Ressourcen umfasst, welche Netzwerkressourcen, Speicherressourcen und/oder Verarbeitungsressourcen umfassen.

7. Verfahren nach Anspruch 1, wobei e) ein Orchestrieren von Funkressourcen umfasst.

8. Verfahren nach Anspruch 1, wobei c) umfasst:
- Bestimmen, für jeden QoS-Parameter, dessen Werte erfasst worden sind, eines Gradienten der erfassten Werte der QoE-Rückmeldung in Bezug auf die erfassten Werte des QoS-Parameters und
- Auswählen, als den QoS-Degradationsparameter, des QoS-Parameters, für welchen der höchste Gradient auf diese Weise bestimmt worden ist.

9. Verfahren nach Anspruch 1, wobei c) umfasst:
- Ausführen eines Hauptkomponentenanalysemechanismus zum Bestimmen einer Hauptkomponente, welche eine maximale Varianz in Bezug auf die erfasste Erlebnisqualitätsrückmeldung aufweist; und
- Auswählen, als den QoS-Degradationsparameter, des QoS-Parameters, dessen erfasste Werte der Hauptkomponente am nächsten sind.

10. Verfahren nach Anspruch 1, wobei c) umfasst:
- Klassifizieren der QoS-Parameter in Klassen in Bezug auf die beobachteten Variationen der QoE-Rückmeldung und
- Auswählen, als den QoS-Degradationsparameter, der Klasse, für welche die größte Variation der QoE-Rückmeldung beobachtet wird.

11. System zum Orchestrieren von Ressourcen in einem drahtlosen Netzwerk, wobei das System wenigstens eine Verarbeitungseinheit (604) umfasst, welche eingerichtet ist zum:
a) Erfassen von Werten einer Mehrzahl von Servicequalitäts-, QoS - quality of service, Parametern und von Erlebnisqualitäts-, QoE - quality of experience, Rückmeldungen, wobei jeder erfasste Wert als zu einer Anwendung gehörend identifiziert wird,
b) Beobachten von Variationen der erfassten Werte, welche als zu einer gleichen gegebenen Anwendung gehörend identifiziert werden,
c) Auswählen (702) eines QoS-Degradationsparameters, welcher der QoS-Parameter ist, dessen Werte für die gegebene Anwendung beobachtete Variationen aufweisen, welche am stärksten mit den beobachteten Variationen der QoE-Rückmeldung für die gegebene Anwendung korreliert sind,
d) Anpassen (704) eines exponentiellen parametrischen Modells zum Annähern einer Beziehung zwischen den beobachteten Variationen der QoE-Rückmeldung für die gegebene Anwendung und den beobachteten Variationen des ausgewählten QoS-Parameters für die gegebene Anwendung und
e) Orchestrieren (706) von Ressourcen des drahtlosen Netzwerks auf Grundlage des angepassten exponentiellen parametrischen Modells.

12. Nicht-transitorisches Speichermedium, welches Anweisungen eines Computerprogramms speichert, welche, wenn sie durch eine Verarbeitungseinheit ausgeführt werden, die Verarbeitungseinheit dazu veranlassen, das Verfahren nach einem der Ansprüche 1 bis 10 durchzuführen.

## Revendications

1. Procédé pour orchestrer les ressources d'un réseau sans fil, le procédé étant mis en œuvre par au moins une unité de traitement (604) et comprenant :
a) la collecte de valeurs d'une pluralité de paramètres de qualité de service, QoS, et d'un retour de qualité d'expérience, QoE, chaque valeur collectée étant identifiée comme se rapportant à une application,
b) l'observation de variations des valeurs collectées identifiées comme se rapportant à une même application donnée,
c) la sélection (702) d'un paramètre de dégradation de QoS qui est le paramètre de QoS dont les valeurs ont observé des variations pour l'application donnée qui sont les plus corrélées avec les variations observées du retour de QoE pour l'application donnée,
d) l'ajustement (704) d'un modèle paramétrique exponentiel pour approximer une relation entre les variations observées du retour de QoE pour l'application donnée et les variations observées du paramètre de QoS sélectionné pour l'application donnée, et
e) l'orchestration (706) de ressources du réseau sans fil sur la base du modèle paramétrique exponentiel ajusté.

2. Procédé selon la revendication 1, dans lequel :
- b), c) et d) sont répétés pour une pluralité d'applications déployées sur le réseau sans fil pour obtenir une pluralité de modèles paramétriques exponentiels ajustés en correspondance bi-univoque avec la pluralité d'applications, et
- e) comprend l'orchestration des ressources du réseau sans fil sur la base de chacun des modèles paramétriques exponentiels ajustés.

3. Procédé selon la revendication 1, dans lequel le réseau sans fil est un réseau non public.

4. Procédé selon la revendication 1, dans lequel les valeurs de retour de QoE se rapportant à une application proviennent d'une pluralité d'applications client de ladite application.

5. Procédé selon la revendication 1, dans lequel les valeurs de retour de QoE comprennent une note moyenne d'opinion et/ou une valeur de crête de rapport de signal sur interférence et bruit.

6. Procédé selon la revendication 1, dans lequel e) comprend l'orchestration de ressources virtuelles comprenant des ressources de réseau, des ressources de stockage et/ou des ressources de traitement.

7. Procédé selon la revendication 1, dans lequel e) comprend l'orchestration de ressources radio.

8. Procédé selon la revendication 1, dans lequel c) comprend :
- la détermination, pour chaque paramètre de QoS dont les valeurs ont été collectées, d'un gradient des valeurs de retour de QoE collectées par rapport aux valeurs dudit paramètre de QoS collectées, et
- la sélection, en tant que paramètre de dégradation de QoS, du paramètre de QoS pour lequel le gradient le plus élevé a ainsi été déterminé.

9. Procédé selon la revendication 1, dans lequel c) comprend :
- le lancement d'un mécanisme d'analyse en composantes principales pour déterminer une composante principale montrant une variance maximale par rapport à la qualité de retour d'expérience collectée ; et
- la sélection, en tant que paramètre de dégradation de QoS, du paramètre de QoS dont les valeurs collectées sont les plus proches de ladite composante principale.

10. Procédé selon la revendication 1, dans lequel c) comprend :
- le classement des paramètres de QoS en classes par rapport aux variations de QoE observées, et
- la sélection, en tant que paramètre de dégradation de QoS, de la classe pour laquelle la plus grande variation du retour de QoE est observée.

11. Système pour orchestrer les ressources dans un réseau sans fil, le système comprenant au moins une unité de traitement (604) configurée pour :
a) collecter des valeurs d'une pluralité de paramètres de qualité de service, QoS, et d'un retour de qualité d'expérience, QoE, chaque valeur collectée étant identifiée comme se rapportant à une application,
b) observer des variations des valeurs collectées identifiées comme se rapportant à une même application donnée,
c) sélectionner (702) un paramètre de dégradation de QoS qui est le paramètre de QoS dont les valeurs ont observé des variations pour l'application donnée qui sont les plus corrélées avec les variations observées du retour de QoE pour l'application donnée,
d) ajuster (704) un modèle paramétrique exponentiel pour approximer une relation entre les variations observées du retour de QoE pour l'application donnée et les variations observées du paramètre de QoS sélectionné pour l'application donnée, et
e) orchestrer (706) des ressources du réseau sans fil sur la base du modèle paramétrique exponentiel ajusté.

12. Support de stockage non transitoire stockant des instructions d'un programme informatique qui, lorsqu'elles sont exécutées par une unité de traitement, amènent l'unité de traitement à réaliser le procédé selon l'une quelconque des revendications 1 à 10.
